# EUROPEAN PATENT APPLICATION

(11) **EP 3 296 103 A1**
(43) Date of publication of application: **21.03.2018**
(21) Application number: 16020337.8
(22) Date of filing: 19.09.2016
(51) Int. Cl.: B32B 7/04, B32B 7/12, B32B 27/08, B32B 27/10, B32B 29/00, B32B 3/26, B32B 7/14, B65D 85/76

(54) **PACKAGING LAMINATE**

(71) Applicant: Amcor Flexibles France SAS, 92052 Paris La Defense Cedex (FR)
(72) Inventor: PROVOST, Jean-Jacques, 16300 Barret (FR); BONIFACY, Jean-Marie, 16400 La Couronne (FR)
(74) Representative: Althaus, Roland

(57) **Abstract**

A packaging laminate (1) comprising at least two layers, an outer layer (4) comprising plastics and an inner layer (7). The outer layer (4) and the inner layer (7) are adhesively bonded by an interposed non-continuous adhesive layer (10), whereby the adhesive layer (10) covers at least 1% of an interface (13) between the outer layer (4) and the inner layer (7).

## Description

The present invention relates to a packaging material for packaging moisture-sensitive products comprising at least two layers.

It is known that foodstuffs such as soft cheeses mature during storage. In the course of this maturation process gases, such as CO₂ are produced. It is important that the produced CO₂ may escape from the package and is not accumulated within. The moisture of the environment must be controlled as well as the ingress of oxygen may have to be limited. In particular, in the case of soft cheeses which are enclosed in final form in their packaging immediately or shortly after production, the packaging material is very important as the cheeses have to mature in their packaging and have to be ready packed for storage, handling and selling.

A packaging material e.g. for cheese, meat etc., known for example from EP-A 0 229 550, comprises a combination of a support and a material that is permeable to moisture. The support may be of paper or a micro-porous polymer or a polymer featuring micro-perforations. The material which is permeable to moisture is e.g. a polymer or copolymer based on acrylnitriles, in particular grafted polymers of amido-polyacrylnitrile and a polyfunctional alcohol.

Such packaging materials are complicated to manufacture and can be improved upon further e.g. with respect to the materials to be used, properties and economics of manufacture. Their capability to maintain a suitable atmosphere within the package that allows maturation of the packed cheese is limited.

In addition, it may be desirable to have some information, e.g. in the form of a picture or a logo directly on the surface of the cheese. Such information may for instance be used for marketing purposes.

The object of the present invention is to provide an improved material that is simple in its manufacture.

The objectives are achieved by a packaging laminate as defined in claim 1. Preferred embodiments are subject to dependent claims. A method for producing an image on the surface of the cheese is defined in claim 14.

A packaging laminate according to the present invention comprises at least two layers, namely an outer layer and an inner layer. The outer layer comprises plastic whereas the inner layer may comprise plastic or alternatively a paper. The outer and the inner layer are adhesively bonded by an interposed non-continuous adhesive layer. The adhesive layer interposed between the outer and the inner layer only partially covers an interface between the outer and the inner layer. Said interface is covered by at least 1% by the adhesive layer, that is to say, at least 1% of the area between the outer and inner layer is covered by the non-continuous adhesive layer.

In a preferred embodiment the non-continuous adhesive layer comprises an adhesive which preferably comprises a colored pigment in the range of 0.1 weight-percent to 5 weight-percent based on the total weight of the adhesive layer.

In another embodiment the outer layer of the packaging laminate comprises a transparent plastic.

The inner layer of the packaging laminate may also comprise at least one transparent plastic.

Preferably the inner layer of the packaging laminate comprises at least one paper. The inner layer may also be a multi-layered structure comprising several papers. The paper of the inner layer has preferably a weight per area in the range of 12g/m² to 100g/m².

The adhesive layer covers the interface between the outer layer and the inner layer only partially. Preferably the adhesive layer covers the interface by 95% or less, more preferably by 50% or less.

In a further embodiment the plastic of the outer layer is biodegradable thereby alleviating the waste management.

In another embodiment the inner layer may be impregnated or preferably coated with a hydrophobic compound. Said hydrophobic compound is preferably paraffin, wax or a synthetic polymer.

In a further embodiment the outer layer which comprises plastic is perforated. The perforation has a density of 1 to 150 holes per cm². A hole of the perforation may have different shapes. It may be circular, oval or even have an irregular shape. In its biggest dimension the holes have a dimension in the range of 0.1 mm to 1.0mm.

Preferably, at least a portion of the circumferential edge is continuously bonded by the adhesive layer. This portion may be the entire length of one of the four edges of the basically rectangular packaging laminate. However, it may also be only a part of said edge. The continuous bonding may also include a corner formed be two adjacent edges.

The continuously bonded portion of the circumferential edge may have different forms. Preferably the continuously bonded portion is achieved in the form of basically rectangular stripes arranged at and substantially parallel to the edge of the packaging laminate between the outer and the inner layer. It may, however, also be achieved by a zone of closely spaced dots. Further variants of this continuously bonded portion of the circumferential edge are also conceivable.

In a further embodiment the adhesive forming the interposed adhesive layer may be regularly distributed in the form of identical or at least two different figures. The shape of said figures may vary. It may be circular dots, small squares, rectangles or the like.

In a preferred embodiment the packaging laminate according to the present invention is used for packaging soft cheeses such as camembert.

A method for producing an image on the surface of the soft cheese comprises the steps of packaging the soft cheese which possesses a layer of mold on its surface. The mold is preferably a white mold. The areas of the outer layer and the inner layer bonded by the non-continuous adhesive layer alter the growth of the mold by limiting gas exchange, in particular oxygen ingress, to the inner side of the package. Thereby, an image is produced in the course of the growth of the mold, preferably white mold, after an appropriate storage period. The image on the surface of the soft cheese corresponds to the shape of the bonded areas of the packaging laminate. It takes at least six days until under appropriate storage conditions the image on the surface of the soft cheese respectively its layer of mold becomes visible.

The packaging laminate according to the present invention is explained in more detail below with reference to exemplary embodiments in the drawings, in which, purely schematically:
Fig. 1 shows a cross-sectional view of a first embodiment of a packaging laminate;
Fig. 2 shows a cross-sectional view of a second embodiment of a packaging laminate;
Fig. 3 shows a cross-sectional view of a third embodiment of a packaging laminate;
Fig. 4 shows a plane view of another embodiment of a packaging laminate;
Fig. 5 shows a plane view of another embodiment of a packaging laminate;
Fig. 6 shows a plane view of another embodiment of a packaging laminate;
Fig. 7 shows a plane view of another embodiment of a packaging laminate;
Fig. 8 shows a plane view of another embodiment of a packaging laminate;
Fig. 9 shows a plane view of another embodiment of a packaging laminate.

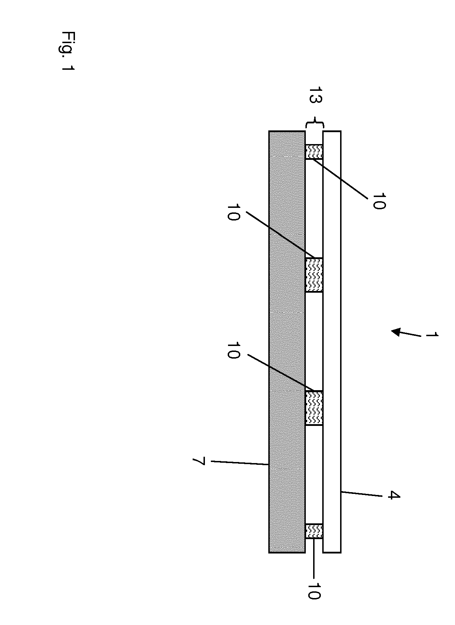

Fig. 1 shows a cross-sectional view of a first embodiment of a packaging laminate 1 according to the present invention. The packaging laminate 1 comprises from the outside to the inside an outer layer 4 and an inner layer 7. The outer layer 4 and the inner layer 7 are adhesively bonded by a non-continuous adhesive layer 10 at least partly covering an interface 13 between the outer layer 4 and the inner layer 7. In the embodiment shown the adhesive layer 13 comprises four parts forming the non-continuous adhesive layer 13. From outside to inside means that one side of the outer layer 4 faces the outside of the package whereas one side of the inner layer 7 is directed to and facing the product space of the package.

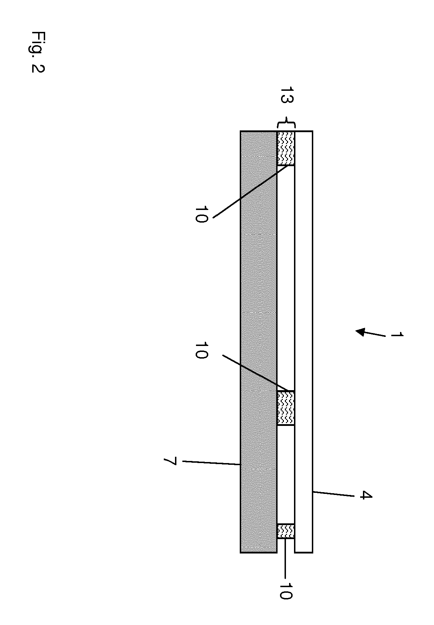

Fig. 2 shows a second embodiment of a packaging laminate 1 according to the present invention. The packaging laminate 1 also comprises two layers, namely an outer layer 4 and an inner layer 7 which are again adhesively bonded by an interposed non-continuous layer 10. From the latter three parts can be seen. One of these parts forming the non-continuous adhesive layer 10 is arranged at the edges of the outer layer 4 and the inner layer 7 thereby bonding at least a part of the circumferential edges.

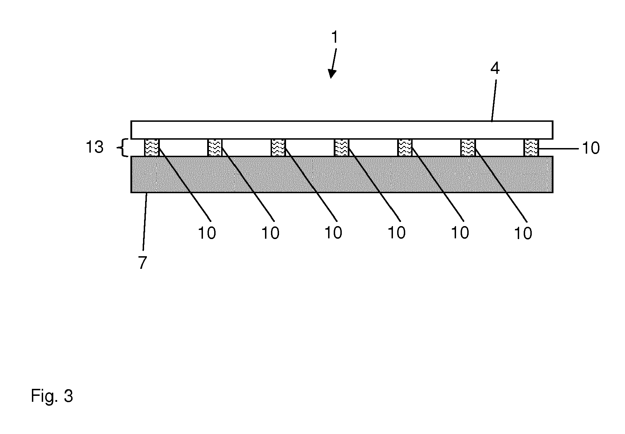

Fig. 3 shows a third embodiment of a packaging laminate 1. The seven parts of the non-continuous adhesive layer bonding the outer layer 4 and the inner layer 7 are regularly distributed over the whole interface 13 between the outer layer 4 and the inner layer 7.

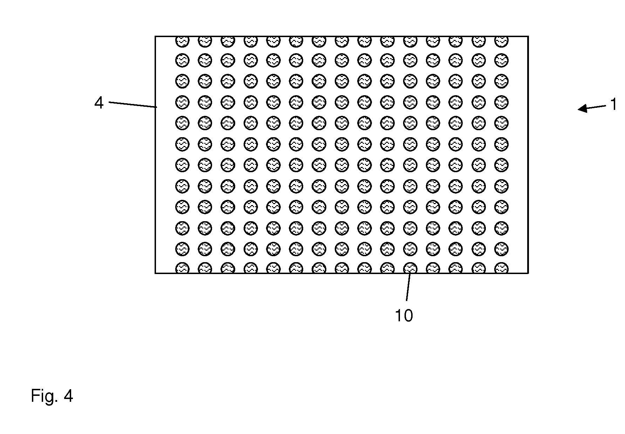

Fig. 4 shows a plane view of a further embodiment of the packaging laminate 1. The outer layer 4 comprises a transparent plastic such that the parts forming the non-continuous adhesive layer 10 comprising a colored adhesive can be seen. The non-continuous layer 10 is formed by a plurality of dots of the colored adhesive arranged in a regular array.

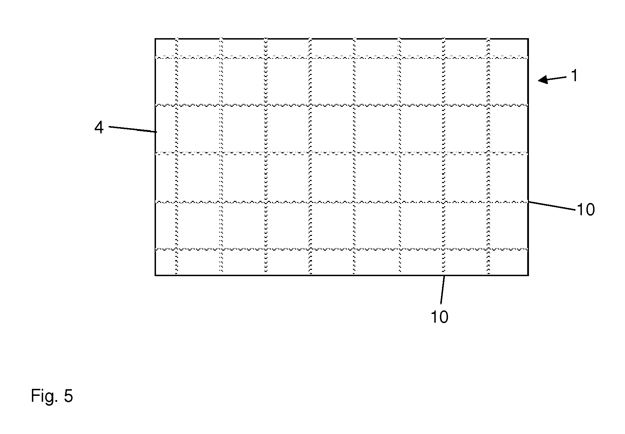

Fig. 5 shows a plane view of another embodiment of the packaging laminate 1. The transparent outer layer 4 is adhesively bonded to the inner layer (not shown) by a plurality of crossed lines made of a colored adhesive. The non-continuous adhesive layer is thus formed by crossed lines spaced apart in regular intervals.

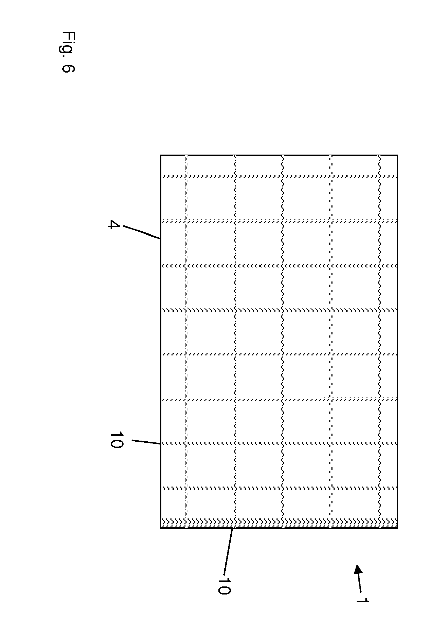

Fig. 6 shows a plane view of a further embodiment of the packaging laminate 1. This embodiment is a variation of the embodiment shown in figure 5. In addition to the plurality of crossed lines forming the non-continuous layer 10 an edge of the outer layer 4 and the inner layer (not shown) is completely bonded by the adhesive layer 10.

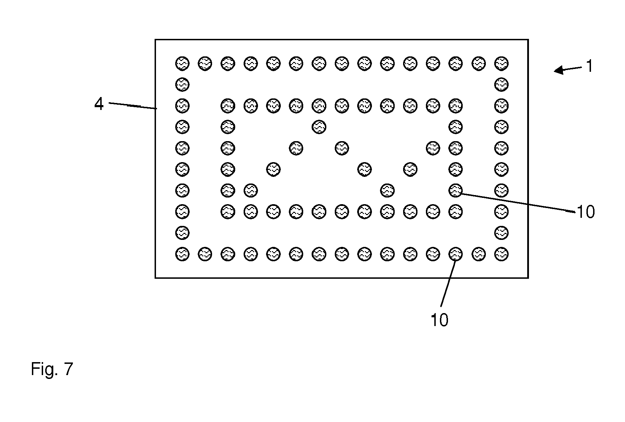

Fig. 7 shows a plane view of a further embodiment of the packaging laminate 1. The non-continuous adhesive layer 10 arranged below the transparent outer layer 4 is formed by a plurality of dots arranged in regular intervals forming two concentric rectangles whereby the smaller inner comprises further dots.

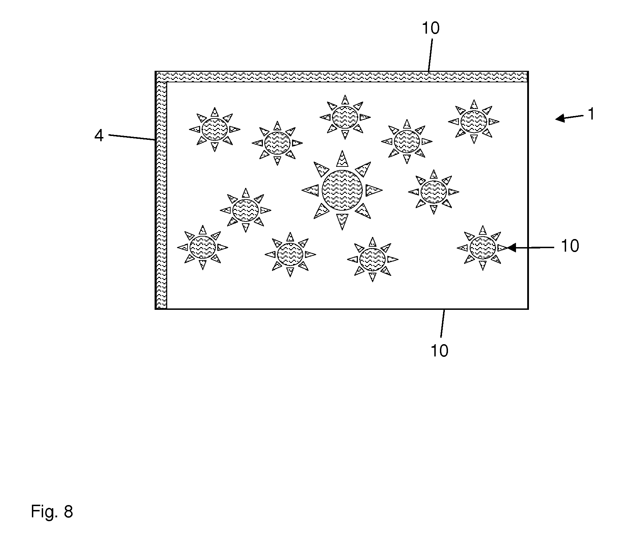

Fig. 8 shows a plane view of another embodiment of the packaging laminate 1. Apart from simple geometric shapes such as circular dots or lines the non-continuous adhesive layer may also be formed by different shapes such as stylized suns as shown in figure 8. In addition to the stylized suns one of which is basically arranged in the center of the rectangular packaging laminate while the rest of the smaller stylized suns is randomly distributed, the non-continuous adhesive layer 10 further comprises two stripes arranged at two adjacent edges of the rectangular packaging laminate 1. These two stripes again completely bond the edges of the outer layer 4 and the inner layer (not shown).

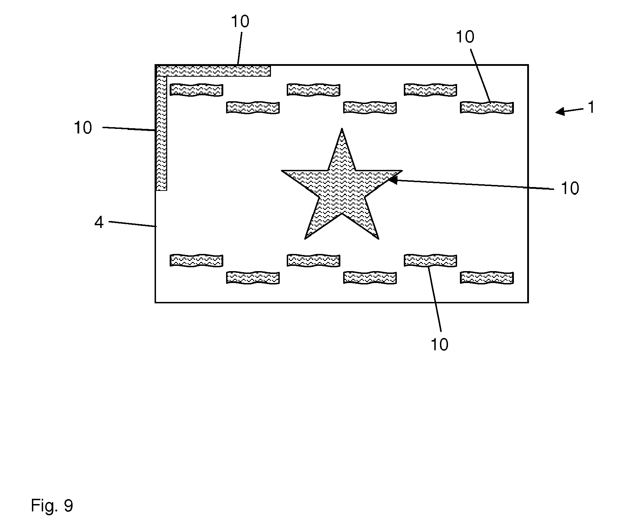

Fig. 9 shows a plane view of another embodiment of the packaging laminate 1. The non-continuous adhesive layer 10 is formed by a five-point star arranged in the center of the basically rectangular packaging laminate 1. Above and below the centrally arranged star there are slightly curved, basically rectangular bands arranged in lines that are basically parallel to the longitudinal edges of the packaging laminate 1. Again, the non-continuous adhesive layer 10 further comprises two stripes arranged at two adjacent edges of the rectangular packaging laminate 1. These two stripes partially bond the adjacent edges of the outer layer 4 and the inner layer (not shown).

## Claims

1. Packaging laminate (1) comprising at least two layers, an outer layer (4) comprising plastic and an inner layer (7), whereby the outer layer (4) and the inner layer (7) are adhesively bonded by an interposed non-continuous adhesive layer (10), said adhesive layer (10) covering at least 1% of an interface (13) between the outer layer (4) and the inner layer (7).

2. Packaging laminate (1) according to claim 1, whereby the non-continuous adhesive layer (10) comprises an adhesive, preferably comprising 0.1 weight-percent to 5 weight-percent of a colored pigment.

3. Packaging laminate (1) according to any of claim 1 or 2, whereby the outer layer (4) comprises a transparent plastic.

4. Packaging laminate (1) according to any of the claims 1 to 3, whereby the inner layer (7) comprises at least one transparent plastic.

5. Packaging laminate (1) according to any of the claims 1 to 3, whereby the inner layer (7) comprises at least one paper.

6. Packaging laminate (1) according to claim 4, whereby the paper of the inner layer (7) has a weight per area in the range of 12g/m² to 100g/m².

7. Packaging laminate (1) according to any of the preceding claims, whereby the adhesive layer (10) covers 95% or less of the interface (13) between the outer layer (4) and the inner layer (7), preferably 50% or less of the interface (13) between the outer layer (4) and the inner layer (7).

8. Packaging laminate (1) according to any one of the preceding claims, whereby the plastic of the outer layer (4) is biodegradable.

9. Packaging laminate (1) according to any one of the preceding claims, whereby the inner layer (7) is impregnated, preferably coated, with a hydrophobic compound, preferably paraffin, wax or a synthetic polymer.

10. Packaging laminate (1) according to any one of the preceding claims, whereby the outer layer (4) comprising plastic is perforated, said perforation having a density of 1 to 150 holes per cm² and whereby a hole has a bigger dimension in the range of 0.1 mm to 1.0mm.

11. Packaging laminate (1) according to any one of the preceding claims whereby at least a portion of the circumferential edge is continuously bonded by the adhesive layer.

12. Packaging laminate (1) according to any one of the preceding claims, whereby the adhesive of the interposed non-continuous adhesive layer is regularly distributed in the form of identical or in the form of at least two different figures.

13. Use of packaging laminate (1) according to any of the preceding claims for packaging soft cheese.

14. Method for producing an image on the surface of the soft cheese comprising the steps of packing the soft cheese having an outer layer of mold, preferably white mold, in a packaging laminate (1) according to any of claims 1 to 13, whereby areas of the outer layer (4) and the inner layer (7) bonded by the non-continuous adhesive layer (10) alter the growth of the white mold, thereby producing an image corresponding to the shape of the bonded areas on the surface of the soft cheese after an appropriate storage period.
